# EUROPEAN PATENT APPLICATION

(11) **EP 2 362 628 A1**
(43) Date of publication of application: **31.08.2011**
(21) Application number: 11250195.2
(22) Date of filing: 18.02.2011
(51) Int. Cl.: H04N 1/00, H04N 1/21

(54) **Single use digital camera**

(30) Priority: 18.02.2010 US 707811
(71) Applicant: Chen, Win How, Taipei City 106 (TW)
(72) Inventor: Chen, Win How, Taipei City 106 (TW)
(74) Representative: Turner, Craig Robert

(57) **Abstract**

A camera including a processor and an image sensor, memory device, and communication port that are electrically coupled with the processor. The image sensor captures image data and transmits it to the processor, which sends it to the memory device for storage. After the image data is downloaded from the camera through the communication port, the processor becomes disabled. Preferably, the memory device is a volatile memory device that is permanently connected with a power supply. Preferably, the communication port is a standard USB receptacle. Preferably, the image data is deleted from the memory device after it is downloaded from the camera. Preferably, the camera includes a sealed housing that contains the processor, image sensor and memory device.

## Description

This invention relates to a digital camera, and more particularly to a single use digital camera for consumer use.

There are a number of disadvantages with known single use film and digital cameras. For instance, single use film cameras must be returned to a film processing location so that the film within the cameras may be retrieved and processed. Commercially available single use digital cameras have a proprietary download port, which requires that they must also be taken to a download station in order to retrieve the image data files on the cameras. The proprietary download ports on the cameras have been exploited by hackers who have posted on the Internet methods by which images can be downloaded from the cameras without returning them to a download station.

In one embodiment of camera according to the present invention, the camera comprises a processor and an image sensor, volatile memory device, power supply, and communication port that are each electrically coupled with the processor. The image sensor captures image data and transmits it to the processor, which sends the image data to the memory device for storage. The volatile memory device and power supply are permanently coupled with the processor so that a constant supply of electric current may be transmitted from the power supply to the volatile memory device through the processor in order to retain image data on the volatile memory. The communication port receives the image data from the memory device and transmits it outside of the camera. After the communication port transmits the image data, the processor becomes disabled so that the camera can no longer be used. Disabling the processor ensures that the camera cannot be hacked and reused. The use of volatile memory lowers the cost of the camera in comparison with cameras that use non-volatile memory. Cameras according to this embodiment of the invention may further comprise a housing comprising a plurality of sealed walls defining an interior space within which said processor, said image sensor, said memory device, and said power supply are positioned. The communication port of cameras according to this embodiment of the invention may comprise a standard Universal Serial Bus ("USB") receptacle, wherein the image data is deleted from the memory device after the USB receptacle transmits the image data. The volatile memory device may comprise synchronous dynamic random access memory.

According to another embodiment of camera according to the present invention, the camera has a processor and an image sensor, memory device, and standard USB receptacle that are each electrically coupled with the processor. The image sensor captures image data and transmits it to the processor, which sends the image data to the memory device for storage. The image data may be stored as a JPEG file on the memory device. The USB receptacle receives the image data from the memory device and transmits the image data outside of the camera. After the image data is transmitted through the USB receptacle, the image data is deleted from the memory device and the processor becomes disabled. The USB receptacle ensures that a typical consumer can download the image data on the camera using a conventional USB cable. Deleting the image data from the camera after download protects the privacy of a user's photos. Disabling the processor ensures that the camera cannot be hacked and reused.

Another embodiment of camera according to the present invention has a processor and an image sensor, memory device, and communication port that are electrically coupled with the processor. The camera also includes a housing comprising a plurality of sealed walls within which the processor, image sensor, and memory device are positioned. The housing can help prevent a user from accessing and attempting to modify the components within the housing. The image sensor captures image data and transmits it to the processor, which sends the image data to the memory device for storage. The communication port receives the image data from the memory device and transmits the image data outside of the camera. After the image data is transmitted through the communication port, the processor becomes disabled to prevent further use of the camera. The image data may be deleted from the memory device after the communication port transmits the image data.

The processor of cameras according to the present invention may regulate the amount of electric current supplied to said memory device. Optionally, the processor supplies to the memory device of cameras according to the present invention approximately the minimum amount of electric current necessary to retain the image data on said memory device. The power supply of cameras according to the present invention may be operable to supply the minimum amount of electric current necessary to retain the image data on said memory device for between approximately 2 to 5 months, or for between approximately 3 to 4 months. In embodiments in which the processor supplies to the memory device approximately the minimum amount of electric current necessary to retain the image data on said memory device, the minimum amount of electric current necessary to retain the image data on said memory device may be approximately 0.03 milliamperes.

Cameras according to the present invention may comprise a flash that is electrically coupled with the processor. The power supply may be operable to quickly charge the flash. Cameras according to the present invention may also comprise an LCD screen that is electrically coupled with the processor.

Standard USB receptacles suitable for use with cameras of the present invention may be selected from the group consisting of a Standard-A receptacle, a Standard-B receptacle, a Mini-B receptacle, a Micro-B receptacle, and a Micro-AB receptacle. The standard USB receptacle may comprise a receptacle described in a specification published by USB Implementers Forum, Inc.

The housing of cameras according to the present invention may comprise no seams between any of the plurality of sealed walls. The housing may be designed such that the processor, the image sensor, and the memory device cannot be removed from the housing without breaking the housing. A power supply, electrically coupled with the processor and operable to transmit electric current from the power supply to the memory device, may be permanently sealed within the interior space of the housing.

Additional aspects of the invention, together with the advantages and novel features appurtenant thereto, will be set forth in part in the description which follows, and in part will become apparent to those skilled in the art upon examination of the following, or may be learned from the practice of the invention. The objects and advantages of the invention may be realized and attained by means of the instrumentalities and combinations particularly pointed out in the appended claims.

Reference is made to the accompanying drawings in which:
Fig. 1 is a front perspective view of a single use digital camera according to one embodiment of the present invention;
Fig. 2 is a rear perspective view of the camera of Fig. 1;
Fig. 3 is a front elevational view of the camera of Fig. 1 showing portions of the camera's interior;
Fig. 4 is a block diagram of the camera of Fig. 1; and
Fig. 5 is an exploded view of the camera of Fig. 1.

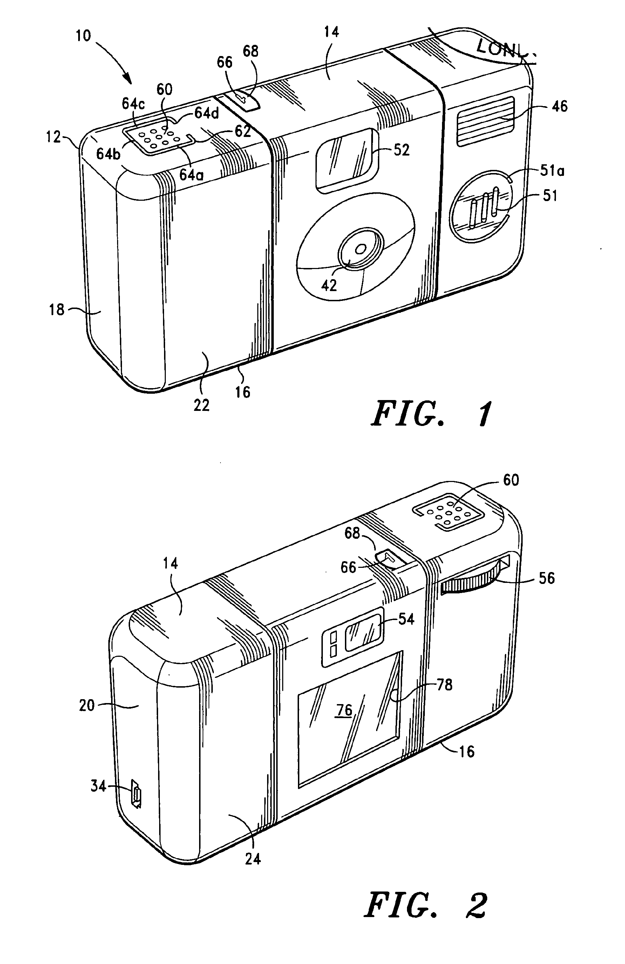

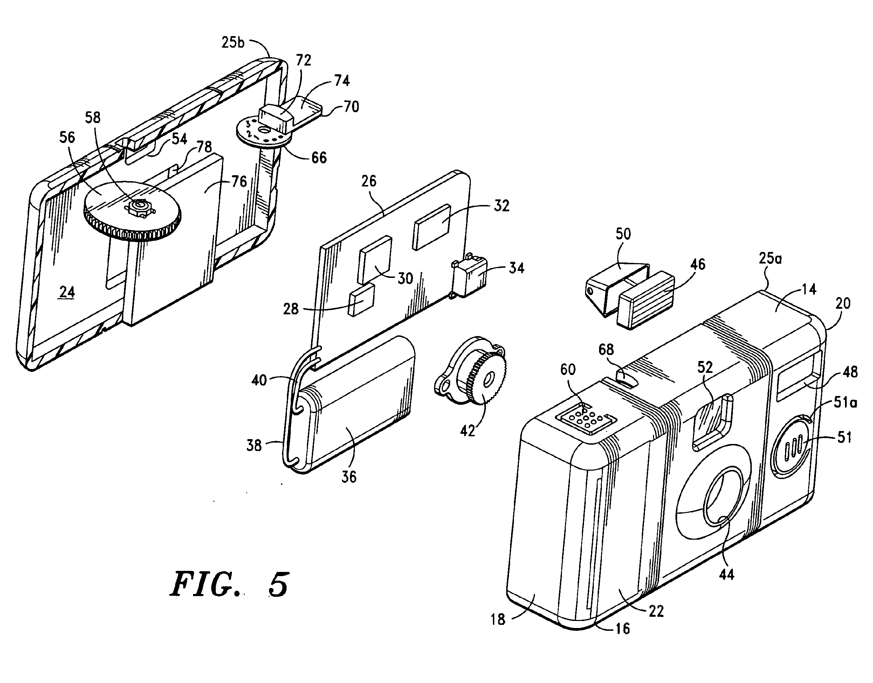

A single use digital camera according to one embodiment of the present invention is shown generally as 10 in Fig. 1. Referring to Figs. 1 and 2, camera 10 has a sealed housing 12 comprising top and bottom walls 14 and 16, side walls 18 and 20, and front and rear walls 22 and 24. Walls 14, 16, 18, 20, 22, and 24 are permanently joined to prevent access to the camera's internal components (shown in Fig. 5), which are positioned in an interior space that is defined by the joined walls. The walls are preferably made of plastic and may be permanently joined by any manner including welding or heat sealing. There are no seams between any of the walls 14, 16, 18, 20, 22, and 24 that a person could exploit to gain access to the camera's internal components. Rather, the housing 12 must be broken in order to access the camera's internal components.

When camera 10 is assembled, housing 12 may be formed from front and rear sections 25a and 25b (Fig. 5) that are sealed together. Front section 25a includes top and bottom walls 14 and 16, side walls 18 and 20, and front wall 22, while rear section 25b includes rear wall 24. During assembly rear wall 24 is preferably permanently joined to walls 14, 16, 18, and 20 by welding.

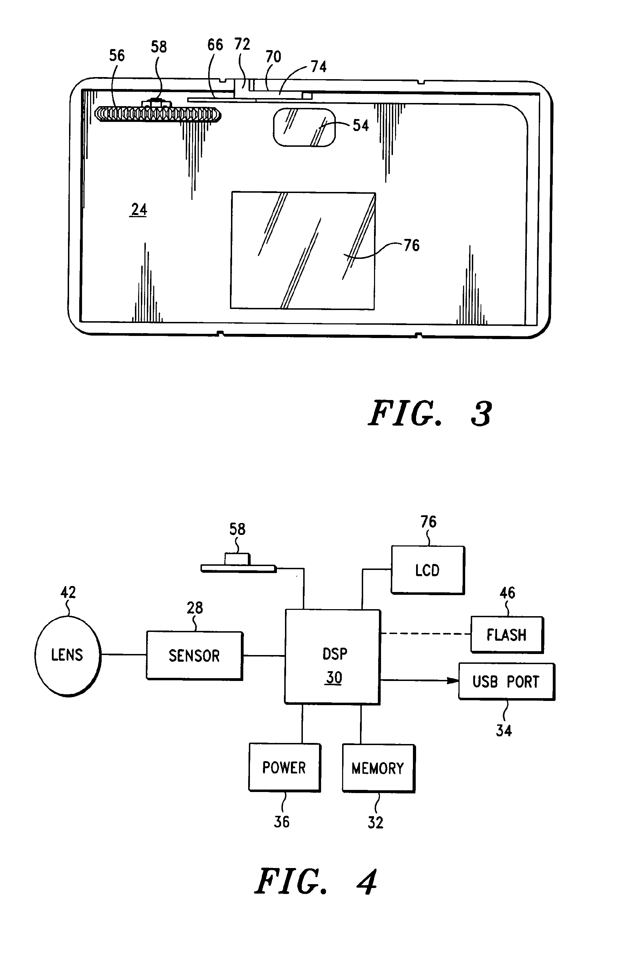

Referring to Figs. 4 and 5, camera 10 includes a circuit board 26 that mounts an image sensor 28, a digital signal processor 30, a memory device 32, and a communication port 34. A power supply 36 is permanently joined to the circuit board 26 with connectors 38 and 40, and the circuit board 26 includes a permanent electrical connection between connectors 38 and 40 and processor 30. As shown in Figs. 1 and 5, a lens 42 is positioned within an opening 44 in the front wall 22 of the housing. A flash 46 is positioned within an opening 48 in the front wall 22 of the housing. A flash housing 50 is positioned behind the flash 46 in order to maintain the position of the flash 46 within the opening 48. A flash button 51 is formed in the front wall 22 of the housing. The flash button 51 is a circular portion of front wall 22 that is formed by making a continuous slit 51a in the front wall 22 around a portion of the flash button 51. Referring to Figs. 1 and 2, there are view finder openings 52 and 54 in the front and rear walls 22 and 24, respectively, to assist a user in sighting an object for photographing.

As shown in Figs. 2, 3, and 5, a rotatable plate 56 is mounted within the housing 12, and a shutter button 58 is positioned above the plate 56 for operating the lens 42. The plate 56 must be rotated each time after the shutter button 58 is pressed in order to prepare the camera 10 to receive and record a new image. In one embodiment, a mechanical structure links rotatable plate 56 and shutter button 58 to prevent shutter button 58 from being pressed until plate 56 is rotated. In another embodiment, rotatable plate 56 and shutter button 58 are electrically coupled with processor 30. Processor 30 prevents shutter button 58 from operating lens 42 until processor 30 detects that plate 56 has been rotated.

The top wall 14 of the housing has a moveable tab 60 that is positioned above the shutter button 58. The tab 60 is a rectangular portion of the top wall 14 that is formed by making a continuous slit 62 in the top wall around three sides of the tab 64a, 64b, and 64c and a portion of a fourth side 64d of the tab, as shown in Fig. 1. A rotatable image counter 66 (Fig. 5) is positioned beneath an opening 68 in the top wall 14 of the housing so that a user can view either how many photo images have already been stored, or how many photo images can be stored. The image counter 66 preferably rotates to display a new image count whenever plate 56 is rotated. The image counter 66 is mounted within the housing with a clear plastic mount 70, as shown in Fig. 3. The mount 70 is L-shaped with one leg 72 that is received by the opening 68 and another leg 74 that extends along an inner surface of the top wall 14 within the housing.

As shown in Fig. 2, an LCD screen 76 is positioned within the housing 12 adjacent to an opening 78 in the rear wall 24 of the housing. The LCD screen 76 may display an image preview so that a user of the camera 10 may view where lens 42 is aimed before pressing the shutter button 58. The LCD screen 76 may also display an image count that either represents how many photo images have already been stored, or how many photo images can be stored. If the LCD screen 76 displays an image count, then the image counter 66 may be omitted from the camera 10. The LCD screen 76 may also be used to view an image after it has been recorded by the camera 10. If the LCD screen 76 has this functionality, then preferably a user can delete the data for the last photo image recorded by the camera. The image counter 66 and LCD screen 76 are optional features of the camera 10 such that one or both of them could be omitted from the camera.

As shown in Fig. 4, the image sensor 28, memory device 32, communication port 34, power supply 36, flash 46, shutter button 58, and LCD screen 76 are all electrically connected to the digital signal processor 30. These connections are not shown in Fig. 5 for clarity. These components may be electrically connected to the processor 30 via electrical pathways on the circuit board 26 and/or wires that extend between the components and the circuit board 26 or processor 30. It is within the scope of the invention for these components to be connected in any manner known in the art.

The image sensor 28, lens 42, flash 46, and shutter button 58 may be any type of conventional lens, image sensor, flash, and shutter button that are currently used in digital cameras. Although the camera 10 according to the present invention is not limited by the following description, in one embodiment, the lens 42 is configured to focus light from an object to be photographed on the image sensor 28. The lens 42 has one or more moveable shutters that move and allow light to pass through the lens 42 and onto the image sensor 28 when the shutter button 58 is depressed. The image sensor 28 converts focused light from the lens 42 into image data in the form of a digital signal that is then sent to the digital signal processor 30. The digital signal processor 30 converts the digital signal into an image data file. Preferably, the digital signal processor 30 converts the digital signal into a conventional and commonly used type of image data file such as a JPEG file. The digital signal processor 30 then sends the image data file to the memory device 32 for storage thereon. Prior to depressing the shutter button 58, if the user wishes to utilize flash 46, then the user depresses flash button 51 to charge flash 46 as is known in the art of single use cameras. Pressing flash button 51 preferably connects power supply 36 to flash 46. Preferably, power supply 36 is a pair of conventional alkaline AA batteries because they are able to quickly charge flash 46. Preferably, the camera 10 has a flash indicator light that turns on when the flash 46 is sufficiently charged. When the flash 46 is charged, the flash 46 emits a short burst of bright light after the shutter button 58 is depressed and immediately prior to the opening of the moveable shutters within the lens 42.

The digital signal processor 30 includes firmware that instructs the processor 30. The firmware preferably includes instructions on power management, converting image data into an image data file, sending an image data file to memory device 32, displaying information on LCD screen 76, operating the moveable shutters within lens 42 in response to depression of shutter button 58, discharging flash 46, and operating communication port 34.

With respect to power management, preferably the firmware instructs the processor 30 to only provide the minimum amount of power and/or electric current from the power supply 36 to the camera's components that is necessary to retain the image data files on memory device 32 for a specified amount of time. For example, in one embodiment, memory device 32 is volatile memory, such as synchronous dynamic random access memory ("SDRAM"), which means that the memory device 32 needs a constant supply of electric current to store data files. In this embodiment, before any image data files are stored on the memory device 32, such as before the camera 10 has been purchased, the firmware instructs the processor 30 to supply no or very little electric current to the memory device 32 to avoid premature discharge of power supply 36. After the camera 10 has been purchased and at least one image file is stored on memory device 32, the firmware instructs the processor 30 to supply the minimum amount of electric current from the power supply 36 to the memory device 32 in order to maintain image data files on the memory device 32 for a specified amount of time. Preferably, this minimum amount of electric current is the minimum amount of electric current necessary to maintain image data file storage on the memory device 32. For example, in one embodiment, the firmware instructs the processor 30 to supply the minimum amount of electric current from the power supply 36 to the memory device 32 in order to maintain image data files on the memory device 32 for between preferably 2 to 5 months, and more preferably between 3 to 4 months. Once the power supply 36 is discharged to an amount that is insufficient to power camera 10, the camera 10 becomes inoperable.

The power management instructions on the firmware preferably instruct the processor 30 to enter sleep mode when the camera has not been used for a short period of time. In sleep mode, the processor 30 only supplies the minimum amount of electric current to the camera's components that is necessary to maintain image data files on memory device 32. When shutter button 58 is pressed, the processor 30 exits sleep mode and provides the camera's components with the necessary amount of electric current from power supply 36 to receive and record a new photographic image.

The length of time that image data files can be maintained on the memory device 32 depends on the storage capacity of the power supply 36 and the power requirements of the memory device 32. Preferably, the power supply 36 is a pair of conventional alkaline AA batteries. Preferably, the power supply 36 is configured so that it is capable of maintaining image data files on memory device 32 for between approximately 3 to 4 months after the power supply 36 has resided within a dormant camera 10 containing no image data files for approximately 15 months. However, it is within the scope of the present invention for any type of battery to be used in camera 10. Preferably, the components of camera 10 require an electric current of approximately 0.03 milliamperes when memory device 32 stores at least one image data file and the camera 10 is not being operated. However, the components may require any amount of electric current to maintain storage of image data files.

Preferably, memory device 32 is volatile memory such as SDRAM. Preferably, memory device 32 contains 64 megabytes of SDRAM enabling the memory device 32 to store between approximately 500 to 1000 separate JPEG image data files having a resolution of approximately 1.3 megapixels. However, memory device 32 may have any amount of storage and may be capable of storing any number of image data files. For example, the amount of image data files that memory 32 can store may be limited in order to limit use of camera 10 to a single-use cycle. Memory device 32 is preferably SDRAM in order to lower the production cost of camera 10 in comparison with conventional digital cameras that utilize more expensive non-volatile memory such as flash memory.

Preferably, power supply 36 is permanently electrically connected to the digital signal processor 30 so that the power supply 36 will not be disconnected from the processor 30 if the camera is accidentally dropped or shaken. Further, the processor 30 is preferably permanently electrically connected to the memory device 32 so that the processor 30 can continuously supply electric current from the power supply 36 to the memory device 32 even if the camera is accidentally dropped or shaken. Connectors 38 and 40 are preferably wires that are permanently connected both to the power supply 36 and to the circuit board 26. Permanently joining connectors 38 and 40 of power supply 36 to circuit board 26 eliminates the need for a connecting plug attached to connectors 38 and 40 and a corresponding receptacle attached to circuit board 26, thereby lowering the cost of camera 10.

Preferably, the processor 30 and memory device 32 are permanently connected to the circuit board 26, and there is a permanent electrical connection on the circuit board 26 between where the connectors 38 and 40 are connected to the circuit board 26 and the processor 30. Preferably, there is also a permanent electrical connection on the circuit board 26 between the processor 30 and the memory device 32 for continuously supplying power from the processor 30 to the memory device 32. These permanent electrical connections are important to ensure the continuous flow of electric current from the power supply 36 to the memory device 32 if the memory device 32 is volatile memory that requires constant electric current to maintain storage of image data files. The connectors 38 and 40 may be permanently connected to the power supply 36 and circuit board 26 by any means including welding and soldering. Further, the processor 30 and memory device 32 may be permanently connected to circuit board 26 by any means including welding or soldering.

The power supply 36 may also be permanently connected to circuit board 26 without using connectors 38 and 40. In this embodiment, the power supply 36 is preferably permanently welded or soldered to circuit board 26, and there are permanent electrical connections on the circuit board 26 between the power supply 36 and the processor 30 and between the processor 30 and the memory device 32.

Preferably, the communication port 34 is a standard Universal Serial Bus ("USB") receptacle as described in a USB Specification published by USB Implementers Forum, Inc. The communication port 34 receives image data files from the memory device 32 and transmits those image data files through a cable that is connected to the communication port 34. The cable may transmit those image data files into a third party device such as a personal computer or printer. Preferably, the communication port 34 is a standard USB receptacle as described in USB Specification Revision 2.0 or USB Specification Revision 3.0, which includes a Standard-A USB receptacle, a Standard-B USB receptacle, a Mini-B USB receptacle, a Micro-B USB receptacle, and a Micro-AB USB receptacle. Most preferably, the communication port 34 is a Mini-B USB receptacle.

Preferably, the image data files may be downloaded from camera 10 with a standard USB cable having on one end a standard USB plug that is capable of receiving data from the USB receptacle on camera 10, and on the opposite end a USB plug that is capable of transmitting data to a standard personal computer or printer. Because most personal computers have a Standard-A USB receptacle, preferably one end of the USB cable includes a Standard-A USB plug. Preferably, the other end of the cable includes a standard USB plug that is capable of receiving data from the USB receptacle type communication port 34. In this embodiment, because the communication port 34 is preferably a standard USB receptacle, any consumer having a standard USB cable that can receive data from communication port 34 and transmit that data to a personal computer is able to download their image data files from camera 10 to a personal computer. While preferably, the necessary type of USB cable for downloading image data files from camera 10 is not provided along with camera 10, it is within the scope of the invention to provide a kit that comprises camera 10 and a USB cable capable of receiving image data files from communication port 34 and transmitting those image data files to a standard computer.

Preferably, in order to limit use of the camera to a single use cycle, the processor's 30 firmware includes instructions that disable the processor 30 after a user has downloaded image data files from the camera 10 through communication port 34. This enables the camera's 10 manufacturer to limit use of the camera 10 so that the camera 10 will not operate after image data files have been downloaded from it. Use of camera 10 is also limited due to the fact that the sealed housing 12 makes it impossible for a consumer to replace a discharged power supply 36 without breaking the housing 12. Use of the camera 10 may also be limited by rotatable plate 56 and image counter 66. Preferably, image counter 66 is not reversible such that after the image counter 66 is rotated to display its last number, it is no longer possible to rotate the image counter 66 or the rotatable plate 56 that is coupled to the image counter 66. Because the plate 56 needs to be rotated in order to depress shutter button 58, it is not possible to depress the shutter button 58 when the rotatable plate 56 becomes immovable. Because the housing 12 is sealed, it is not possible to reverse the image counter 66 without breaking the housing 12.

Preferably, the processor's 30 firmware also instructs the processor 30 to delete any stored image data files from memory device 32 after the image data files are downloaded from the camera through communication port 34. This ensures that a user's image data files cannot be easily retrieved by a subsequent possessor of the camera 10. This feature is important because according to one method of using the camera 10, purchasers of the camera 10 are requested to return the camera 10 to the manufacturer after image data files are downloaded from the camera 10 so that certain components of the camera can be re-used. A retail store that sells camera 10 may accept a used camera 10 from a purchaser and return that camera 10 to the manufacturer. In this situation, it is important to delete a user's image data files from the camera 10 so that employees of the retail store cannot access the user's image data files and invade the user's privacy.

In operation, a user of the camera optionally charges flash 46 by pressing and holding flash button 51 until the flash indicator light turns on. Then the user aims the camera at a photographic object by sighting the object through viewfinders 52 and 54 or by viewing the object on LCD screen 76. The tab 60 on housing 12 is depressed, which depresses shutter button 58. Depression of shutter button 58 is detected by processor 30, which executes instructions to discharge flash 46 and open the shutters within lens 42 to focus light on image sensor 28. Image sensor 28 converts the light into a digital signal, and processor 30 retrieves the digital signal from the image sensor 28. The processor 30 converts the digital signal into an image data file and sends the data file to memory device 32 for storage. The user then rotates plate 56 until the image counter 66 displays a new number of image data files stored or image data files that can be stored on memory device 32. The process is repeated until memory device 32 can no longer hold additional image data files, or a set amount of image data files have been stored on memory device 32. Then, the plug on one end of a cable is inserted into communication port 34 and a plug on the other end of the cable is inserted into a communication port on a third party device such as a personal computer or printer. The image data files are downloaded from the camera 10 causing the processor to delete the image data files from memory device 32 and disable the processor 30 so that the camera 10 is inoperable for further use.

In a preferred life-cycle of camera 10, a user purchases the camera 10 and uses it in accordance with the above description. After all of the image data files have been downloaded from the camera 10 and the camera 10 disables itself, the user either throws the camera in the trash or returns the camera to the manufacturer. To entice the user to return the camera, the manufacturer may provide incentives to the user. Once the manufacturer receives a used camera 10, the housing 12 of the camera is broken so that the circuit board 26 and power supply 36 can be removed from the housing 12. The firmware on the processor 30 is flashed or updated to enable operation of the processor 30. Further, the power supply 36 is either recharged or replaced with a new power supply 36 that is permanently connected to the circuit board 26 by welding connectors 38 and 40 to the circuit board. Preferably, power supply 36 is replaced to avoid the need for providing a relatively expensive rechargeable power supply. The circuit board 26, image sensor 28, memory device 32, communication port 34, lens 42, flash 46, flash housing 50, plate 56, shutter button 58, image counter 66, mount 70, and LCD screen 76 are preferably removed from the used, broken housing 12 and inserted into a new housing 12 along with the recharged or replaced power supply 36 and updated processor 30. The new housing 12 is then permanently sealed by plastic welding or another suitable operation to prevent access to the camera's internal components.

The present invention has been described above with reference to the terms "processor" and "memory device." It should be understood that as used herein (including in the claims) the term "processor" may mean either a single processor that performs the described processes or a plurality of processors that collectively perform the described processes; and the term "memory device" means either a single memory device that stores the described image data file(s) or a plurality of memory devices that collectively store the described image data file(s). Thus, the system and method may be implemented with any number of processor(s) and memory device(s) without departing from the scope of the present invention.

From the foregoing it will be seen that this invention is one well adapted to attain all ends and objectives herein-above set forth, together with the other advantages which are obvious and which are inherent to the invention.

Since many possible embodiments may be made of the invention without departing from the scope thereof, it is to be understood that all matters herein set forth or shown in the accompanying drawings are to be interpreted as illustrative, and not in a limiting sense.

It will be appreciated that the above invention can be modified.

While specific embodiments have been shown and discussed, various modifications may of course be made, and the invention is not limited to the specific forms or arrangement of parts and steps described herein, except insofar as such limitations are included in the following claims. Further, it will be understood that certain features and subcombinations are of utility and may be employed without reference to other features and subcombinations. This is contemplated by and is within the scope of the claims.

## Claims

1. A camera, comprising:
a. a processor;
b. an image sensor that is electrically coupled with said processor, said image sensor operable to capture image data and transmit it to said processor;
c. a volatile memory device that is permanently electrically coupled with said processor, said memory device operable to receive the image data from said processor and store the image data;
d. a power supply that is permanently electrically coupled with said processor, said processor operable to transmit electric current from said power supply to said memory device; and
e. a communication port that is electrically coupled with said processor, said communication port operable to receive the image data from said memory device and transmit the image data, and wherein said processor is disabled after said communication port transmits the image data.

2. The camera of claim 1, wherein said processor regulates the amount of electric current supplied to said memory device.

3. The camera of claim 2, wherein said processor supplies to said memory device approximately the minimum amount of electric current necessary to retain the image data on said memory device.

4. The camera of claim 3, wherein said power supply is operable to supply the minimum amount of electric current necessary to retain the image data on said memory device for between approximately 2 to 5 months.

5. The camera of claim 4, wherein said power supply is operable to supply the minimum amount of electric current necessary to retain the image data on said memory device for between approximately 3 to 4 months.

6. The camera of claim 3, wherein the minimum amount of electric current necessary to retain the image data on said memory device is approximately 0.03 milliamperes.

7. The camera of any preceding claim, further comprising a housing comprising a plurality of sealed walls defining an interior space within which said processor, said image sensor, said memory device, and said power supply are positioned.

8. The camera of any preceding claim, wherein said communication port comprises a standard USB receptacle, and wherein the image data is deleted from said memory device after said USB receptacle transmits the image data.

9. The camera of any preceding claim, wherein said volatile memory device comprises synchronous dynamic random access memory.

10. The camera of any preceding claim, further comprising a flash that is electrically coupled with said processor.

11. The camera of claim 10, wherein said power supply is operable to quickly charge said flash.

12. The camera of any preceding claim, further comprising an LCD screen that is electrically coupled with said processor.

13. A camera, comprising:
a. a processor;
b. an image sensor that is electrically coupled with said processor, said image sensor operable to capture image data and transmit it to said processor;
c. a memory device that is electrically coupled with said processor, said memory device operable to receive the image data from said processor and store the image data; and
d. a standard USB receptacle that is electrically coupled with said processor, said USB receptacle operable to receive the image data from said memory device and transmit the image data, wherein the image data is deleted from said memory device after said USB receptacle transmits the image data, and wherein said processor is disabled after said USB receptacle transmits the image data.

14. The camera of claim 13, wherein said standard USB receptacle is selected from the group consisting of a Standard-A receptacle, a Standard-B receptacle, a Mini-B receptacle, a Micro-B receptacle, and a Micro-AB receptacle.

15. The camera of claim 13 or 14, wherein said standard USB receptacle comprises a receptacle described in a specification published by USB Implementers Forum, Inc.

16. The camera of claim 13, 14 or 15, wherein the image data is stored as a JPEG file on said memory device.

17. A camera, comprising:
a. a processor;
b. an image sensor that is electrically coupled with said processor, said image sensor operable to capture image data and transmit it to said processor;
c. a memory device that is electrically coupled with said processor, said memory device operable to receive the image data from said processor and store the image data;
d. a communication port that is electrically coupled with said processor, said communication port operable to receive the image data from said memory device and transmit the image data, and wherein said processor is disabled after said communication port transmits the image data; and
e. a housing comprising a plurality of sealed walls defining an interior space within which said processor, said image sensor, and said memory device are positioned.

18. The camera of claim 17, wherein there are no seams between any of the plurality of sealed walls.

19. The camera of claim 18, wherein said processor, said image sensor, and said memory device cannot be removed from said housing without breaking said housing.

20. The camera of claim 17, 18 or 19, wherein the image data is deleted from said memory device after said communication port transmits the image data.

21. The camera of any of claims 17 to 20, further comprising a power supply that is electrically coupled with said processor, said processor operable to transmit electric current from said power supply to said memory device, wherein said power supply is permanently sealed within said interior space of said housing.
